# EUROPÄISCHE PATENTSCHRIFT

(11) **EP 1 731 559 B1**
(45) Veröffentlichungstag und Bekanntmachung des Hinweises auf die Patenterteilung: **22.08.2007**
(21) Anmeldenummer: 06112704.9
(22) Anmeldetag: 18.04.2006
(51) Int. Cl.: C08K 5/00

(54) **Brandgeschützte Polyamidformmasse**
Flame retarded polyamide moulding composition
Composition de moulage en polyamide ignifugée

(30) Priorität: 08.06.2005 DE 102005026265
(43) Veröffentlichungstag der Anmeldung: 13.12.2006
(73) Patentinhaber: Degussa GmbH, 40474 Düsseldorf (DE)
(72) Erfinder: Wursche, Dr. Roland, 48249 Dülmen (DE); Beuth, Reinhard, 45772 Marl (DE); Dowe, Andreas, 46325 Borken (DE)
(74) Vertreter: Weber, Wolfgang

(56) Entgegenhaltungen:
- EP-A- 0 657 498
- US-A- 4 786 673
- US-A- 5 369 157
- US-A- 6 025 423

## Beschreibung

Gegenstand der Erfindung ist eine Polyamidfonnmasse mit einer Brandschutzausrüstung, die eine Kombination von Melamincyanurat, Polyol und organischen Phosphorverbindungen enthält.

Aufgrund günstiger Basiseigenschaften werden Polyamide wie z. B. PA 12 oder davon abgeleitete Copolyamide in Formmassen für Anwendungen in Kabelschutzrohren, Kabelummantelungen oder Teilen von Kabelummantelungen eingesetzt. Weitere Anwendungsgebiete sind elektrische Bauteile, bei denen eine mittlere Steifigkeit gewünscht ist. Ausschlaggebende Eigenschaften sind hier beispielsweise die ausreichende Schlagzähigkeit bei tiefen Temperaturen, einhergehend mit einer guten Beständigkeit gegen Chemikalien und Hydrolyse. Häufig muss aufgrund der Einsatzbedingungen eine Brandschutzausrüstung in diese Formmassen integriert werden. Vor dem Hintergrund der Diskussion um die ökologischen und toxikologischen Aspekte halogenierter Brandschutzadditive fordert der Markt halogenfreie Lösungen für das genannte Problemfeld. Eine weitere Anforderung ist die V-0-Einstellung nach UL 94 im Bereich zwischen 0,4 und 3,2 mm Schichtdicke. Dies führt aber neben anderen Veränderungen der Basiseigenschaften üblicherweise zu einem Verlust an Flexibilität, der durch den hohen Anteil als Füllstoff wirkender, partikelförmiger Flammschutzmittel verursacht wird Dadurch wird das Einsatzspektrum dieser Materialklasse unvorteilhaft eingeschränkt.

Zur Brandschutzausrüstung von Polyamiden ist eine Reihe verschiedener Verbindungsklassen einsetzbar, beispielsweise halogenhaltige Verbindungen im Zusammenspiel mit Antimonoxiden, Melaminverbindungen wie etwa Melamincyanurat oder Melaminphosphate, Ammoniumpolyphosphat, Melaminborat, Zinkborat, roter Phosphor, organische Phosphorverbindungen, Metallhydroxide oder eine Reihe weiterer anorganischer Verbindungen. Oftmals werden diese Additive in so genannten Brandschutzsystemen eingesetzt, die aus Kombinationen der genannten Verbindungsklassen bestehen. In der Praxis gestaltet sich die Formulierung brandgeschützter Formmassen schwierig, da zum einen in der Regel eine Reihe von weiteren Anforderungen an die Formmassen gestellt wird, die den durch die Brandschutzausrüstung ausgelösten Nebeneffekten teilweise zuwiderlaufen, und weil zum anderen die Übertragbarkeit definierter Brandschutzrezepturen zwischen verschiedenen Polymerklassen, beispielsweise Polyestern und Polyamiden, nicht generell gewährleistet ist. Dies erklärt sich aus den spezifischen Stoffeigenschaften unterschiedlicher Polymere in Verbindung mit den zusätzlich zu den Brandeigenschaften aufgestellten Forderungen an eine entsprechende Formmasse. Beispielsweise ist eine Verträglichkeit der Additive mit der Polymermatrix schwer einzuschätzen und auch von weiteren Zuschlagstoffen einer Formmasse abhängig. Auch zwischen Vertretern einer Stoffklasse, beispielsweise den Polyamiden, sind Unterschiede gegeben. So zeigt beispielsweise ein Polyamid mit höherer Carbonamidgruppendichte wie z. B. PA 6 ein günstigeres Brandverhalten als reines PA 12. Es ist also für jeden Einzelfall eine Optimierung erforderlich.

Die US 4,786,673 beschreibt Polyamid-Zusammensetzungen speziell auf Basis von PA11 und PA 12 mit Melamincyanurat, wobei zur Verbesserung der Brandeigenschaften 0,5 bis 10 % an Polyolen wie Pentaerythrit zugesetzt werden. Eine zusätzliche Verbesserung ergibt sich, wenn die Zusammensetzung 0,2 bis 2 % an Phosphorsäure oder eine Dicarbonsäure als Molekulargewichtsregler enthält. Durch diese Maßnahmen lassen sich Formmassen erhalten, die im UL 94-Test die Einstufung V-0 bei 0,8, 1,6 und 3,2 mm ergeben. Die notwendige Zugabemenge des Melamincyanurats ist im Falle eines mit Dodecandisäure geregelten PA 12 mit 15 % angegeben, die Menge des Pentaerythrits beträgt in diesem Fall 3 %. Bei der Herstellung weichgemachter Formmassen unter Zusatz von etwa 12 % n-Butylbenzolsulfonamid (BBSA) konnte mit Hilfe dieses Brandschutzsystems eine V-0-Einstufung bei PA 11 lediglich bei 3,2 mm realisiert werden. Diese Erkenntnisse deuten an, dass flexible Polyamid-Formmassen auf Basis von PA 12 oder PA 11 mit exzellenten Brandeigenschaften, also mit der UL 94-Einstufung V-0 auch bei 0,4, 0,8 und 1,6 mm, nicht nach dieser Technologie erhalten werden können. In der Tat zeigt eine Nachstellung unter Verwendung von PA 12, dass maximal eine V-2-Einstufung erhalten werden kann.

Auch in weiteren Patentanmeldungen, die verwandte Zusammensetzungen zum Gegenstand haben, werden keine praktikablen Vorschläge zur Lösung der Problemstellung gemacht. Die WO 98/45364 beispielsweise beschreibt Formmassen bestehend aus einem Polyester oder einem Polyamid, die neben Verstärkungsmitteln auch Brandschutzmittelkombinationen bestehend aus Melaminpolyphosphat, einem Verkohlungskatalysator und einem Kohlebildner enthalten können. Auf diese Weise sind flexible Formmassen nicht zugänglich. Entsprechendes gilt für US 5,618,865.

In der WO 97/00916 sind aliphatische Polyamidformassen beschrieben, die eine Kombination von Melamincyanurat und Pentaerythrit enthalten können. Daneben muss zwingend eine anorganische Wolframverbindung anwesend sein. Auch diese Systeme sind nicht geeignet, flexible brandgeschützte Formmassen zur Verfügung zu stellen.

Die JP 07 018 179 A beschreibt brandgeschützte Polyamid-Zusammensetzungen, die Melamincyanurat und bis zu 5 % an Verbindungen enthalten, die von Phosphorsäure abgeleitet sind, wobei es sich bei letzteren um Stabilisatoren handelt. Auch hier wird keine Lehre offenbart, die die Herstellung flexibler, brandgeschützter PA 12-Formmassen beinhaltet.

Insgesamt zeigt sich, dass die Verfahrensweisen nach dem Stand der Technik nicht geeignet sind, die oben gestellten Anforderungen zu erfüllen, nämlich die Bereitstellung einer flexiblen, halogenfrei brandgeschützten Formmasse auf Polyamidbasis mit exzellenten Brandeigenschaften, also V-0 nach UL 94 im Bereich von 0,4 bis 3,2 mm. Der E-Modul der Formmasse als Maß für die Flexibilität sollte etwa im Bereich des E-Moduls des Basispolyamids liegen (der für PA 12 bei ca. 1400 MPa liegt), bevorzugt jedoch darunter. Ferner muss eine gute Verträglichkeit der Additive mit der Matrix sowie eine geringe Flüchtigkeit gegeben sein.

Es wurde gefunden, dass im Sinne der geschilderten Aufgabenstellung geeignete Formmassen erhalten werden können, die folgende Komponenten enthalten:
a) 43 bis 93,5 Gew.-Teile, bevorzugt 50 bis 91,75 Gew.-Teile, besonders bevorzugt 55 bis 89,5 Gew.-Teile und insbesondere bevorzugt 61 bis 87 Gew.-Teile Polyamid,
b) 2 bis 12 Gew.-Teile, bevorzugt 2,5 bis 11 Gew.-Teile, besonders bevorzugt 3 bis 10 Gew.-Teile und insbesondere bevorzugt 4 bis 8 Gew.-Teile Melamincyanurat,
c) 1,5 bis 15 Gew.-Teile, bevorzugt 1,75 bis 12 Gew.-Teile, besonders bevorzugt 2,5 bis 10 Gew.-Teile und insbesondere bevorzugt 3 bis 8 Gew.-Teile Polyol, das mindestens 3 und bevorzugt mindestens 4 OH-Gruppen pro Molekül enthält, sowie
d) 3 bis 30 Gew.-Teile, bevorzugt 4 bis 27 Gew.-Teile, besonders bevorzugt 5 bis 25 Gew.-Teile und insbesondere bevorzugt 6 bis 23 Gew.-Teile einer oder mehrerer Phosphorverbindungen der Formel

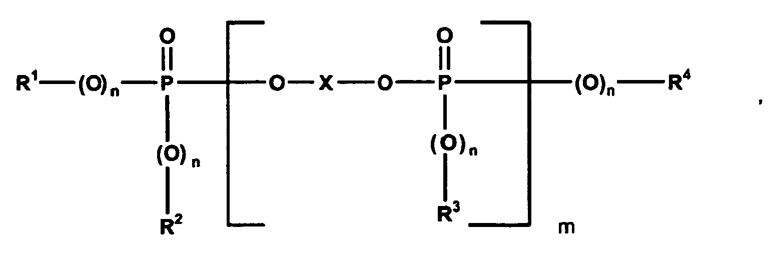

worin R¹, R², R³ und R⁴ unabhängig voneinander ausgewählt sind aus
   - C₁- bis C₈-Alkyl,
   - C₅- bis C₆-Cycloalkyl, gegebenenfalls substituiert durch C₁- bis C₄-Alkyl,
   - C₆- bis C₂₀-Aryl und
   - C₇- bis C₂₁-Aralkyl,
n ist, unabhängig voneinander, 0 oder 1,
m ist eine Zahl von 0 bis 50, vorzugsweise 1, 2, 3, 4, 5, 6, 7, 8, 9 oder 10,
X ist ausgewählt aus
   - einem ein- oder mehrkernigen aromatischen Rest mit 6 bis 30 C-Atomen, wobei die aromatischen Ringe in mehrkernigen Aromaten über Alkylengruppen verbunden sein können, und
   - einem linearen oder verzweigten aliphatischen Rest mit 2 bis 30 C-Atomen, der gegebenenfalls OH-substituiert ist und bis zu 8 Etherbindungen enthalten kann,
mit der Maßgabe, dass sich die Gewichtsteile der Komponenten a) bis d) zu 100 addieren.

Als Polyamide kommen in erster Linie aliphatische Homo- und Copolykondensate in Frage, beispielsweise PA 46, PA 66, PA 68, PA 610, PA 612, PA 614, PA 410, PA 810, PA 1010, PA 412, PA 1012, PA 1212, PA 6, PA 7, PA 8, PA 9, PA 10, PA 11 und PA 12. (Die Kennzeichnung der Polyamide entspricht internationaler Norm, wobei die erste (n) Ziffer(n) die C-Atomzahl des Ausgangsdiamins und die letzte (n) Ziffer(n) die C-Atomzahl der Dicarbonsäure angeben. Wird nur eine Zahl genannt, so bedeutet dies, dass von einer α, ω-Aminocarbonsäure bzw. von dem davon abgeleiteten Lactam ausgegangen worden ist; im Übrigen sei verwiesen auf H. Domininghaus, Die Kunststoffe und ihre Eigenschaften, Seiten 272 ff., VDI-Verlag, 1976.)

Sofern Copolyamide verwendet werden, können diese z.B. Adipinsäure, Korksäure, Sebacinsäure, Isophthalsäure, Terephthalsäure, Naphthalin-2.6-dicarbonsäure usw. als Cosäure bzw. Bis(4-aminocyclohexyl)methan, Trimethylhexamethylendiamin, Hexamethylendiamin oder Ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z.B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328 ff. und 435 ff., Wiley & Sons, 1982, beschrieben werden. Selbstverständlich können auch Mischungen verschiedener Polyamide verwendet werden.

Das Melamincyanurat wird pulverförmig eingesetzt. In einer bevorzugten Ausführungsform besitzt es eine Korngröße D₅₀ (Durchmesser bei 50 %), gemessen durch Laserbeugung mit einem Laser-Granulometer gemäß BS ISO 13320-1, Ausgabe 2000-03-15, von 0,2 bis 10 µm, besonders bevorzugt von 0,4 bis 8 µm, insbesondere bevorzugt von 0,7 bis 6 µm und ganz besonders bevorzugt von 1 bis 5 µm bzw. 1,5 bis 4 µm Die Messung kann beispielsweise mit einem Cilas Laser Granulometer Typ 715/920 durchgeführt werden.

Das Polyol (c) kann beispielsweise ein Triol sein wie Trimethylolpropan oder Glycerol oder ein Derivat hiervon wie Di-trimethylolpropan oder Di-Glycerol (entstanden durch Mono-Veretherung zweier Moleküle der genannten Verbindungen) oder ein Tetrol wie Erythrit, Pentaerythrit oder ein Derivat hiervon wie Di- oder Tripentaerythrit, ein Pentol wie Xylit oder Arabit, ein Hexol wie Mannit, Sorbit oder dergleichen. Daneben sind auch höhere Addukte der genannten Moleküle verwendbar, beispielsweise ein verzweigtes bzw. hyperverzweigtes Polyglycerol. Es können selbstverständlich auch Mischungen von Polyolen eingesetzt werden.

Bei der Phosphorverbindung (d) stehen R¹, R², R³ und R⁴ bevorzugt, unabhängig voneinander, für einen C₁- bis C₄-Alkylrest, Phenyl, Naphthyl oder Biphenylyl. Die aromatischen Gruppen R¹, R², R³, und R⁴ können ihrerseits mit Alkylgruppen, vorzugsweise C₁- bis C₄-Alkyl, substituiert sein, in diesem Fall sind Kresyl, Xylenyl, Propylphenyl oder Butylphenyl besonders bevorzugt.

In der angegebenen Formel ist X vorzugsweise ein ein- oder mehrkerniger Rest der nachstehenden Formel 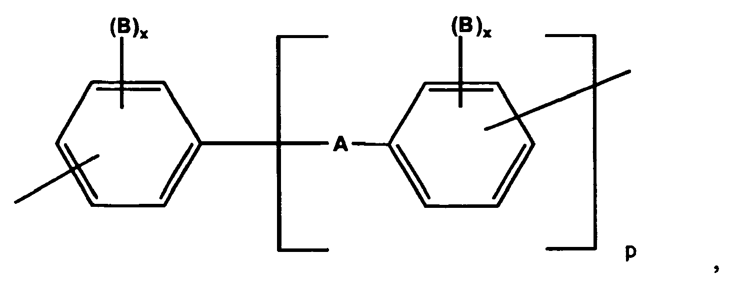 wobei A eine Einfachbindung, C₁- bis C₅-Alkylen, C₂- bis C₅-Alkyliden, C₅- bis C₆-Cycloalkyliden, -O-, -SO-, -CO-, -S-, -SO₂- oder C₆- bis C₁₂-Arylen sein kann; B ist jeweils C₁- bis C₁₂-Alkyl; x ist, jeweils unabhängig voneinander, 0, 1 oder 2 und p ist 0, 1, 2, 3 oder 4.

Als Phosphorverbindung ist besonders eine Verbindung bzw. ein Gemisch von Verbindungen der oben angegebenen Formel bevorzugt, bei der R¹ = R² = R³ = R⁴ = Phenyl, n = 1, m ≤ 3 und X= 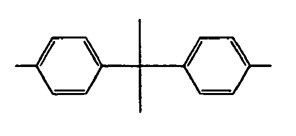 ist.

Neben den Bestandteilen a) bis d) kann die Formmasse noch kleinere Mengen von Zusatzstoffen enthalten, die zum Einstellen bestimmter Eigenschaften benötigt werden. Beispiele hierfür sind schlagzähmodifizierende Kautschuke, Weichmacher, Farbstoffe, Pigmente bzw. Füllstoffe wie Ruß, Titandioxid, Zinksulfid, Silikate oder Carbonate, Verarbeitungshilfsmittel wie Wachse, Zinkstearat oder Calciumstearat, Entformungshilfsmittel, Glaskugeln, Glasfasern, Antioxidantien, UV-Absorber, HALS-Stabilisatoren, Antioxidantien, Antidrippingmittel sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruβ.

In einer möglichen Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Die erfindungsgemäße Formmasse wird aus den einzelnen Bestandteilen vorzugsweise durch Schmelzemischen in einem knetenden Aggregat hergestellt.

Die erhaltene Formmasse besitzt in einer bevorzugten Ausführungsform einen E-Modul, gemessen nach ISO 527, von maximal 1500 MPa, bevorzugt maximal 1450 MPa, besonders bevorzugt maximal 1400 MPa und insbesondere bevorzugt maximal 1350 MPa. Der Mindestwert des E-Moduls beträgt vorzugsweise 800 MPa, 900 MPa, 1000 MPa bzw. 1050 MPa. Der Zusatz von Melamincyanurat bewirkt eine Zunahme des E-Moduls und der Zusatz von Phosphorverbindung bewirkt eine Abnahme des E-Moduls. Durch Variation dieser Komponenten kann der E-Modul auf den gewünschten Wert eingestellt werden.

Aus der erfindungsgemäßen Formmasse können Formteile nach allen üblichen Methoden des Standes der Technik hergestellt und weiterverarbeitet werden, beispielsweise durch Extrusion, Coextrusion, Blasformen oder Spritzguss. Dabei werden unter dem Begriff "Formteil" auch flächige Körper, wie Folien oder Platten, verstanden.

Die erfindungsgemäße Formmasse kann auch mittels eines Verfahrens, das als Rapid Prototyping oder Rapid Manufacturing bekannt ist, zu einem dreidimensionalen Formkörper verarbeitet werden. Insbesondere sind damit schichtweise arbeitende Verfahren gemeint, bei welchen selektiv Bereiche der jeweiligen pulverförmigen Schicht aufgeschmolzen und nach Abkühlen verfestigt werden. Beispiele hierfür sind das selektive Lasersintern, das SIV-Verfahren, wie es in WO 01/38061 beschrieben wird, oder ein Verfahren, wie es aus der EP-A-1 015 214 hervorgeht. Die beiden letzteren Verfahren arbeiten mit einer Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in der DE-A-103 11 438 beschrieben; hier wird die zum Verschmelzen benötigte Energie durch einen Mikrowellengenerator eingebracht und die Selektivität wird durch Auftragen eines Suszeptors erreicht. Weitere geeignete Verfahren sind solche, die mit einem Absorber arbeiten, der entweder im Pulver enthalten ist oder der per Inkjet-Verfahren aufgetragen wird wie in den deutschen Patentanmeldungen DE 10 2004 012 682.8, DE 10 2004 012 683.6 und DE 10 2004 020 452.7 beschrieben. Dabei kann zur Einwirkung der elektromagnetischen Energie eine große Bandbreite an Lasern verwendet werden, aber auch eine flächige Einwirkung der elektromagnetischen Energie ist geeignet.

Das für diese Verfahren eingesetzte Pulver kann durch Vermahlen der erfindungsgemäßen Formmasse, bevorzugt bei tiefen Temperaturen, hergestellt werden. Das Mahlgut kann anschließend fraktioniert werden, um grobe Partikel oder sehr feine Partikel zu entfernen. Auch eine mechanische Nachbehandlung, z. B. in einem schnelllaufenden Mischer zur Verrundung der Partikel, kann angeschlossen werden. Es empfiehlt sich, das so erhaltene Pulver nach dem Stand der Technik mit einer Rieselhilfe auszurüsten, beispielsweise mit pyrogener Kieselsäure, die im Dry Blend untergemischt wird. Vorzugsweise weist das so erhaltene Pulver einen zahlenmittleren Korndurchmesser zwischen 40 und 120 µm und eine BET-Oberfläche von kleiner als 10 m²/g auf.

Alternativ hierzu können die Brandschutzadditive vollständig oder teilweise dem Polyamid bei der Fällung zugegeben werden, entsprechend DE-A-197 08 946 oder DE-A-44 21 454.

Eine andere Möglichkeit, die Brandschutzmittelkombination mit dem pulverförmigen Polyamid zu mischen, besteht darin, dass man die Brandschutzmittelkombination als Suspension oder Lösung in einem geeigneten Lösemittel, beispielsweise Ethanol, zugibt, gegebenenfalls bei erhöhter Temperatur. Durch dieses Verfahren werden die Brandschutzmittel sehr gleichmäßig auf den Polyamidpartikeln verteilt. Das Lösemittel wird anschließend durch Trocknung entfernt.

Die mit Hilfe eines derartigen schichtweise arbeitenden Verfahrens hergestellten Formkörper sind ebenso wie die mittels Spritzguss oder Extrusion hergestellten Formkörper flexibel und brandgeschützt.

Anwendungsgebiete für diese Formkörper sind sowohl im Rapid Prototyping als auch im Rapid Manufacturing zu sehen. Mit Letzterem sind Kleinserien gemeint, also die Herstellung von mehr als einem gleichen Teil in Fällen, wo die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Teile gehen, können die Luft- und Raumfahrtindustrie sein, die Medizintechnik, der Maschinenbau, der Automobilbau, die Sportindustrie, die Haushaltswarenindustrie, die Elektroindustrie und Lifestyle.

Die Erfindung wird im Folgenden beispielhaft erläutert.

In den Beispielen wurden die in der Tabelle 1 angegebenen Materialien eingesetzt.

Die verwendeten PA12-Typen unterscheiden sich in der Viskositätszahl (VZ; gemessen gemäß DIN EN ISO 307) und damit im Molekulargewicht.

Das Melamincyanurat hat einen D₅₀-Wert von 2,69 µm

ADK STAB FP-700 und ADK STAB FP-600 sind Phosphorverbindungen der Formel 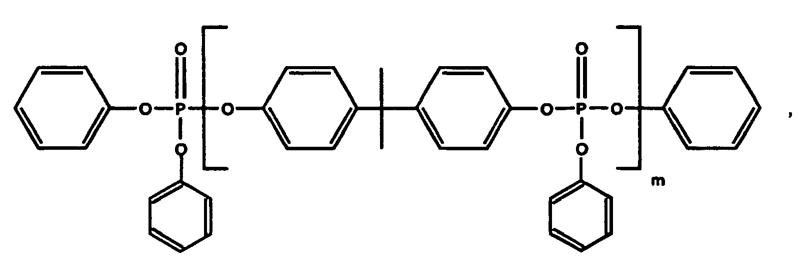 wobei sich die Werte von m unterscheiden.

ADK STAB FP-500 ist eine Phosphorverbindung der Formel

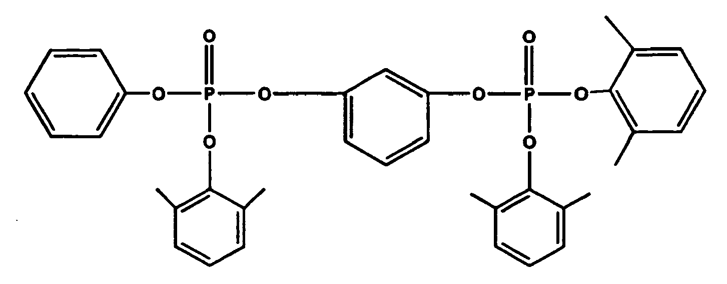

### Vergleichsbeispiele 1- 4 sowie Beispiele 1 - 7:

Durch Schmelzemischen in einem Extruder wurden Formmassen gemäß der Tabelle 1 hergestellt und einer Brandprüfung unterzogen. Die Ergebnisse sowie der durch Zugprüfung bestimmte E-Modul sind der Tabelle 1 wiedergegeben.

**Tabelle 1: Rezepturen und Ergebnisse**

| **Beispiel (B) bzw. Vergleichsbeispiel (VB)** | **VB1** | **VB2** | **VB3** | **B1** | **VB4** | **B2** | **B3** | **B4** | **B5** | **B6** | **B7** |
|---|---|---|---|---|---|---|---|---|---|---|---|
| PA12 mittelviskos VZ: 180 ml/g | | 80 | | | | | | | | | |
| PA12 hochviskos VZ: 240 ml/g | 93 | | 82 | 68 | 68 | 68 | 68 | 68 | 68 | 68 | 80,5 |
| Melamincyanurat | 7 | | 15 | 5 | 5 | 5 | 5 | 5 | 5 | 5 | 6 |
| ADK STAB FP-700 | | 20 | | 20 | | | | | | | |
| ADK STAB FP-600 | | | | | | | 20 | 20 | | | |
| ADK STAB FP-500 | | | | | | | | | 20 | 20 | 10 |
| Dipentaerythrit | | | | 7 | 7 | 7 | 7 | | | 7 | 3,5 |
| Pentaerythrit | | | 3 | | | | | 7 | 7 | | |
| Exolit AP 422 (Ammoniumpolyphosphat) | | | | | 20 | | | | | | |
| Disflamoll DPK (Diphenylkresylphosphat) | | | | | | 20 | | | | | |
| Zugprüfung ISO 527 E-Modul MPa | 1700 | 842 | 1629 | 1225 | 2618 | 1027 | 1205 | 1097 | 1146 | 1408 | 1315 |
| Brandprüfung UL 94 im Klima 23/50 gelagert | | | | | | | | | | | |
| 0,4 mm | nb¹⁾ | nb¹⁾ | V-0 | V-0 | k. E. ²⁾ | V-0 | V-0 | V-0 | V-0 | V-0 | V-0 |
| 0,8 mm | V-2 | V-2 | V-0 | V-0 | V-2 | V-0 | V-0 | V-0 | V-0 | V-0 | V-0 |
| 1,6 mm | V-2 | nb¹) | V-2 | V-0 | V-2 | V-0 | V-0 | V-0 | V-0 | V-0 | V-0 |
| 3,2 mm | V-2 | nb¹⁾ | V-2 | V-0 | V-1 | V-0 | V-0 | V-0 | V-0 | V-0 | V-0 |

| | | | | | | | | | | | |
|---|---|---|---|---|---|---|---|---|---|---|---|
| ¹⁾ nb = nicht bestimmt ²⁾ k E. = keine Einstufung (d. h. schlechter als V-2) | | | | | | | | | | | |

Bei der Beurteilung der Ergebnisse zeigt sich, dass beim Versuch, mit Melamincyanurat alleine oder in Kombination mit Polyol eine V-0-Einstufung einzustellen, eine Formmasse mit zu hohem E-Modul resultiert. Wird dagegen die reine Phosphorverbindung eingesetzt, erhält man flexible Formmassen mit niedrigem E-Modul, die aber nur eine V-2-Einstufung nach UL 94 aufweisen. Erst durch den gemeinsamen Einsatz von Melamincyanurat, Phosphorverbindung und Polyol wird die gewünschte Kombination von Flexibilität und Brandverhalten gefunden. Setzt man statt der anspruchsgemäßen Phosphorverbindung beispielsweise Ammoniumpolyphosphat ein, erhält man sowohl eine Verschlechterung der Brandeigenschaften als auch eine unvorteilhafte Erhöhung des E-Moduls.

Innerhalb der erfindungsgemäßen Beispiele lassen sich folgende Trends ablesen:
- Aufgrund von günstigerem Preis und niedrigerem E-Modul ist die Verwendung von Pentaerythrit gegenüber Dipentaerythrit bevorzugt.
- ADK STAB FP-700 und FP-600 zeigen die beste Balance der Eigenschaften Flexibilität (E-Modul) der Formmasse und Flüchtigkeit der Phosphorverbindung; FP-500 zeigt eine geringere weich machende Wirkung, aber auch geringere Flüchtigkeit. Disflammol DPK zeigt eine höhere Weichmachung, aber auch deutlich höhere Flüchtigkeit. Im Vergleich zwischen FP-700 und FP-600 scheint bezüglich Flüchtigkeit das FP-600 leicht überlegen, da es mehr oligomere Bestandteile enthält.

Insgesamt kann festgestellt werden, dass deutlich weniger Melamincyanurat dosiert werden muss, wenn die erfindungsgemäße Brandschutzmittelmischung eingesetzt wird.

## Patentansprüche

1. Formmasse, die folgende Komponenten enthält:
a) 43 bis 93,5 Gew.-Teile Polyamid,
b) 2 bis 12 Gew.-Teile Melamincyanurat,
c) 1,5 bis 15 Gew.-Teile Polyol mit mindestens 3 OH-Gruppen pro Molekül und
d) 2 bis 30 Gew.-Teile Phosphorverbindung der Formel 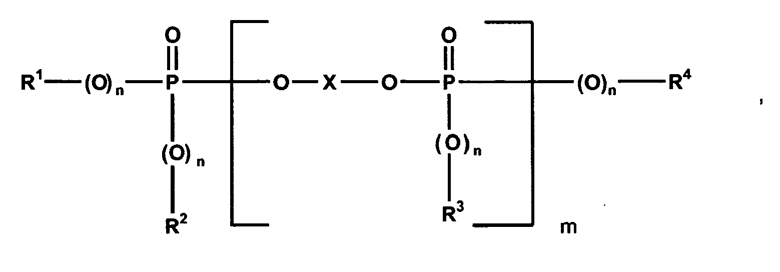
worin R¹, R², R³ und R⁴ unabhängig voneinander ausgewählt sind aus
- C₁- bis C₈-Alkyl,
- C₅-bis C₆-Cycloalkyl, gegebenenfalls substituiert durch C₁- bis C₄-Alkyl,
- C₆- bis C₂₀-Aryl und
- C₇- bis C₂₁-Aralkyl,
n ist, unabhängig voneinander, 0 oder 1,
m ist eine Zahl von 0 bis 50,
X ist ausgewählt aus
- einem ein- oder mehrkernigen aromatischen Rest mit 6 bis 30 C-Atomen und
- einem linearen oder verzweigten aliphatischen Rest mit 2 bis 30 C-Atomen, der gegebenenfalls OH-substituiert ist und bis zu 8 Etherbindungen enthalten kann,
mit der Maßgabe, dass sich die Gewichtsteile der Komponenten a) bis d) zu 100 addieren.

2. Formmasse gemäß Anspruch 1,
**dadurch gekennzeichnet,**
**dass** das Polyamid ausgewählt ist aus der Gruppe PA46, PA 66, PA 68, PA 610, PA 612, PA 614, PA 410, PA 810, PA 1010, PA 412, PA 1012, PA 1212, PA 6, PA 7, PA 8, PA 9, PA 10, PA 11, PA 12 oder Mischungen hiervon.

3. Formmasse gemäß einem der vorhergehenden Ansprüche,
**dadurch gekennzeichnet,**
**dass** das Polyol mindestens 4 OH-Gruppen pro Molekül enthält.

4. Formmasse gemäß einem der vorhergehenden Ansprüche,
**dadurch gekennzeichnet,**
**dass** sie einen E-Modul, gemessen nach ISO 527, im Bereich von 900 bis 1500 MPa besitzt.

5. Formmasse gemäß einem der vorhergehenden Ansprüche,
**dadurch gekennzeichnet,**
**dass** sie als Pulver vorliegt.

6. Formkörper, hergestellt aus der Formmasse gemäß einem der vorhergehenden Ansprüche.

7. Formkörper gemäß Anspruch 6,
**dadurch gekennzeichnet,**
**dass** er eine Folie ist.

8. Verwendung von Pulver gemäß Anspruch 5 zur Herstellung eines Formkörpers mit Hilfe eines schichtweise arbeitenden Verfahrens.

## Claims

1. Molding composition which comprises the following components:
a) from 43 to 93.5 parts by weight of polyamide,
b) from 2 to 12 parts by weight of melamine cyanurate,
c) from 1.5 to 15 parts by weight of polyol having at least 3 OH groups per molecule, and
d) from 2 to 30 parts by weight of phosphorus compound of the formula 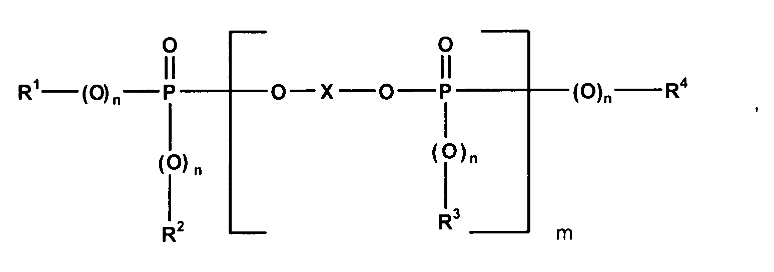
in which R¹, R², R³, and R⁴, independently of one another, have been selected from
- C₁-C₈-alkyl,
- C₅-C₆-cycloalkyl, if appropriate substituted by - C₁-C₄-alkyl ,
- C₆-C₂₀-aryl and
- C₇-C₂₁-aralkyl,
each n is, independently of the others, 0 or 1,
m is a number from 0 to 50,
X has been selected from
- a mono- or polynuclear aromatic radical having from 6 to 30 carbon atoms, and
- a linear or branched aliphatic radical having from 2 to 30 carbon atoms, which, if appropriate, has OH substitution, and which can contain up to 8 ether bonds,
with the proviso that the parts by weight of components a) to d) give a total of 100.

2. Molding composition according to Claim 1,
**characterized in that**
the polyamide has been selected from the group of PA 46, PA 66, PA 68, PA 610, PA 612, PA 614, PA 410, PA 810, PA 1010, PA 412, PA 1012, PA 1212, PA 6, PA 7, PA 8, PA 9, PA 10, PA 11, PA 12, or a mixture thereof.

3. Molding composition according to any of the preceding claims,
**characterized in that**
the polyol contains at least 4 OH groups per molecule.

4. Molding composition according to any of the preceding claims,
**characterized in that**
it has a modulus of elasticity, measured to ISO 527, in the range from 900 to 1500 MPa.

5. Molding composition according to any of the preceding claims,
**characterized in that**
it takes the form of powder.

6. Molding, produced from the molding composition according to any of the preceding claims.

7. Molding according to Claim 6,
**characterized in that**
it is a foil.

8. Use of powder according to Claim 5 for production of a molding with the aid of a layer-by-layer process.

## Revendications

1. Masse de moulage qui contient les composants suivants :
a) 43 à 93,5 parties en poids de polyamide,
b) 2 à 12 parties en poids de cyanurate de mélamine,
c) 1,5 à 15 parties en poids de polyol comprenant au moins 3 groupes OH par molécule et
d) 2 à 30 parties en poids de composé phosphoré de formule 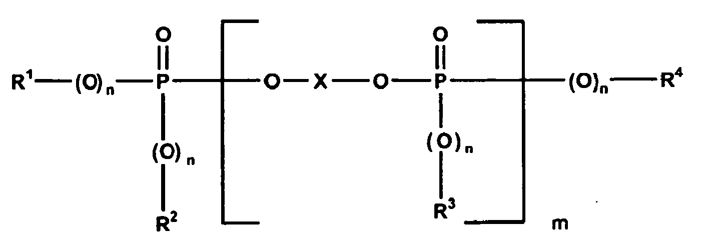
où R¹, R², R³ et R⁴ sont choisis, indépendamment l' un de l'autre, parmi
- alkyle en C₁ à C₈
- cycloalkyle en C₅ à C₆, le cas échéant substitué par alkyle en C₁ à C₄,
- aryle en C₆ à C₂₀ et
- aralkyle en C₇ à C₂₁,
n vaut, indépendamment l'un de l'autre, 0 ou 1,
m représente un nombre de 0 à 50
X est choisi parmi
- un radical aromatique à un ou plusieurs noyaux comprenant 6 à 30 atomes de carbone et
- un radical aliphatique linéaire ou ramifié comprenant 2 à 30 atomes de carbone, qui est le cas échéant substitué par OH et qui peut contenir jusqu'à 8 liaisons éther,
à condition que les parties en poids des composants a) à d) s'additionnent à 100.

2. Masse de moulage selon la revendication 1, **caractérisée en ce que** le polyamide est choisi dans le groupe formé par les polyamides PA 46, PA 66, PA 68, PA 610, PA 612, PA 614, PA 410, PA 810, PA 1010, PA 412, PA 1012, PA 1212, PA 6, PA 7, PA 8, PA 9, PA 10, PA 11, PA 12 ou les mélanges de ceux-ci.

3. Masse de moulage selon l'une quelconque des revendications précédentes, **caractérisée en ce que** le polyol contient au moins 4 groupes OH par molécule.

4. Masse de moulage selon l'une quelconque des revendications précédentes, **caractérisée en ce qu'**elle présente un module E, mesuré selon la norme ISO 527, dans la plage de 900 à 1500 MPa.

5. Masse de moulage selon l'une quelconque des revendications précédentes, **caractérisée en ce qu'**elle se trouve sous forme de poudre

6. Corps moulé, réalisé à partir de la masse de moulage selon l'une quelconque des revendications précédentes.

7. Corps moulé selon la revendication 6, **caractérisé en ce qu'**il s'agit d'une feuille.

8. Utilisation de la poudre selon la revendication 5 pour la réalisation d'un corps moulé à l'aide d'un procédé travaillant en couches.
